# EUROPÄISCHE PATENTSCHRIFT

(11) **EP 3 799 663 B1**
(45) Veröffentlichungstag und Bekanntmachung des Hinweises auf die Patenterteilung: **20.12.2023**
(21) Anmeldenummer: 19739911.6
(22) Anmeldetag: 27.06.2019
(51) Int. Cl.: H01H 33/56, H01H 33/22

(54) **ELEKTRISCHES SCHALTGERÄT**
ELECTRICAL SWITCHING DEVICE
APPAREIL DE COMMUTATION ÉLECTRIQUE

(30) Priorität: 27.07.2018 DE 102018212581
(43) Veröffentlichungstag der Anmeldung: 07.04.2021
(73) Patentinhaber: Siemens Energy Global GmbH & Co. KG, 81739 München (DE)
(72) Erfinder: GLAUE, Andreas, 12205 Berlin (DE); JUHRE, Karsten, 13505 Berlin (DE); KLEINSCHMIDT, Andreas, 16515 Oranienburg (DE); KUSCHEL, Mark, 13156 Berlin (DE); LUTZ, Bernhard, 10629 Berlin (DE); SEUBERT, Ingo, 10585 Berlin (DE)
(86) Internationale Anmeldenummer: PCT/EP2019/067112
(87) Internationale Veröffentlichungsnummer: WO 2020/020562

(56) Entgegenhaltungen:
- WO-A1-2017/029338
- WO-A1-2017/121665
- DE-A1-102015 213 598

## Beschreibung

Die vorliegende Erfindung betrifft ein elektrisches, insbesondere gasisoliertes, Schaltgerät mit einer verbesserten Entlassung des Isoliermediums. Die vorliegende Erfindung betrifft ferner ein Verfahren zum Entfernen eines Isoliermediums aus einem elektrischen, insbesondere gasisolierten, Schaltgerät.

Gasisolierte Schaltgeräte auf Basis SF₆-freier Isoliergase werden oft mit Gasmischungen betrieben, die aus einem oder mehreren Trägergasen und speziellen additiven Substanzen bestehen. Bei den additiven Substanzen handelt es sich beispielsweise um fluorierte Verbindungen, die die dielektrischen Eigenschaften der Gasmischung in bestimmter Weise beeinflussen. Bei den Trägergasen handelt es sich in der Regel um Mischungen, die größtenteils Kohlendioxid, Stickstoff und Sauerstoff in bestimmten Verhältnissen enthalten. Während des Betriebs der Geräte entstehen durch Entladungsvorgänge Zersetzungsprodukte, die giftig sein können und deshalb nicht in die Umwelt entlassen werden können. Auch die in den Gasmischungen enthaltenen fluorierten Verbindungen können gesundheits-, umwelt- oder klimaschädlich sein und sollten deshalb nicht in die Umwelt gelangen. Unter Umständen ist es aber erforderlich, das Schaltgerät zu entleeren, etwa nach Betriebsstörungen, im Falle einer Reparatur oder einer geplanten Revision.

Das Dokument WO 2017/029338 A1, beispielsweise, beschreibt ein Verfahren zur Rückgewinnung einer Substanz aus einem Isoliermedium einer elektrischen Vorrichtung zur Erzeugung, Übertragung, Verteilung und/oder Nutzung von elektrischer Energie, wobei das Isoliermedium eine Organofluorverbindung umfasst und eine weitere Komponente in der Gasphase. Das Verfahren umfasst folgende aufeinanderfolgende Schritte: a) Überführen eines die Organofluorverbindung und mindestens eine weitere Komponente des Isoliermediums enthaltenden Ausgangsgasgemisches aus einem Isolationsraum der elektrischen Vorrichtung in eine Substanzrückgewinnungsvorrichtung, b) Verflüssigen der Organofluorverbindung in der Substanzrückgewinnungsvorrichtung durch b1) Komprimieren der anfänglichen Gasmischung und b2) Abkühlen der komprimierten anfänglichen Gasmischung auf eine Temperatur, bei der sich die Organofluorverbindung verflüssigt, und c) Trennen der verflüssigten fluororganischen Verbindung von dem restlichen Gas, das die mindestens eine verbleibende Komponente des anfänglichen Gasgemisches enthält. Der Offenlegungsschrift
DE 10 2015 213 598 A1 ist eine Hoch- und Mittelspannungsanordnung mit einem Isolierraum und einem Absorber mit selektiver Membran entnehmbar. Ein im Isolierraum befindliches gasförmiges Isoliermedium wird über Leitungen zu einem Behälter geführt, in welchem eine Sorptionsmittel angeordnet ist. Eine selektive Membran separiert den Isolierraum von dem Sorptionsmittel. Dem Dokument WO 2017/121665 A1 ist eine elektrische Isolationsanordnung sowie ein Verfahren zur Wartung einer elektrischen Isolationsanordnung entnehmbar. Dort ist vorgeschlagen, zum Binden von Fremdstoffen aus einem in einem Fluidraum der elektrischen Isolationsanordnung angeordneten elektrisch isolierenden Fluid, eine Filtereinrichtung zu verwenden. Um die Filtereinrichtung dem elektrisch isolierenden Fluid auszusetzen, sind Ventile vorgesehen, wodurch ein Entweichen von elektrisch isolierendem Fluid verhindert ist.

Derartige aus dem Stand der Technik bekannte Lösungen können jedoch noch weiteres Verbesserungspotential bieten, insbesondere hinsichtlich eines einfach umzusetzenden und verlässlichen Entlassens eines Gasgemisches aus einem Schaltgerät.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung bereitzustellen, durch welche auf einfache und umweltfreundliche Weise ein gasförmiges Isoliermedium aus einem Schaltgerät entlassen werden kann.

Die Lösung der Aufgabe erfolgt erfindungsgemäß durch ein Schaltgerät mit den Merkmalen des Anspruchs 1. Die Lösung der Aufgabe erfolgt erfindungsgemäß ferner durch ein Verfahren mit den Merkmalen des Anspruchs 9. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Es wird vorgeschlagen ein elektrisches Schaltgerät zum Bereitstellen und Unterbrechen einer elektrischen Verbindung, aufweisend einen Schaltraum, wobei unmittelbar in dem Schaltraum oder in einem in dem Schaltraum angeordneten und zu dem Schaltraum gasdicht ausgebildeten Kapselungsgehäuse zwei Kontaktstücke angeordnet sind, wobei die Kontaktstücke zum Bewirken einer Schalthandlung relativ zu einander bewegbar sind, wobei ferner ein fluides, insbesondere gasförmiges, Isoliermedium vorgesehen ist, dass in dem Schaltraum oder einem mit dem Schaltraum verbindbaren Lagervolumen angeordnet ist, und wobei der Schaltraum oder das Lagervolumen einen Auslass zum Auslassen des fluiden Isoliermediums aufweist, wobei an oder benachbart zu dem Auslass ein Filter vorgesehen ist, der dazu ausgestaltet ist, gasförmige Bestandteile des durch den Auslass geführten Isoliermediums oder deren Reaktionsprodukte zu filtern und der Auslass in der Umgebung mündet, so dass ein den Filter verlassendes Isoliermedium in die Umgebung entlassbar ist.

Ein derartiges Schaltgerät erlaubt auf besonders vorteilhafte Weise eine Lösung, durch welche auf einfache Weise ein gasförmiges Isoliermedium umweltfreundlich aus einem Schaltgerät entlassen werden kann.

Die vorliegende Erfindung betrifft somit ein elektrisches Schaltgerät. Ein derartiges Schaltgerät ist an sich bekannt und dient dabei insbesondere dazu, elektrische Leitungen zu trennen, an denen hohe Ströme fließen. Somit dient das Schaltgerät dem Bereitstellen und Unterbrechen einer elektrischen Verbindung.

Elektrische Schaltgeräte sind beispielsweise Leistungsschalter, Trennschalter, Erdungsschalter, kombinierte Trenn-Erdungsschalter usw. wie z. B. aus dem Stand der Technik grundsätzlich bekannt.

Beispielsweise ist das Schaltgerät ein Hochspannungsschalter beziehungsweise Leistungsschalter. Ein derartiges Schaltgerät kann dabei zum Führen von hohen Strömen beziehungsweise dem Anliegen einer hohen Spannung geeignet sein, wobei bei einem Trennen Lichtbögen auftreten können.

Beispielhafte Ströme, welche durch einen Leistungsschalter eines Hochspannungsschalters getrennt werden können, können in einem Bereich von bis zu 80.000A liegen. Ferner können an dem Schaltgerät Spannungen in einem Bereich von bis zu 800.000V anliegen.

Entsprechend ist es vorgesehen, dass das Schaltgerät einen Schaltraum aufweist. Der Schaltraum kann beispielsweise gegen die Umgebung gasdicht ausgestaltet sein beziehungsweise verkapselt sein. Dabei kann der Schaltraum auch gegenüber anderen Volumina des Schaltgeräts gasdicht abgeschlossen beziehungsweise verkapselt sein.

Es ist ferner vorgesehen, dass unmittelbar in dem Schaltraum oder in einem in dem Schaltraum angeordneten und zu dem Schaltraum gasdicht ausgebildeten Kapselungsgehäuse zwei Kontaktstücke angeordnet sind, wobei die Kontaktstücke zum Bewirken einer Schalthandlung relativ zu einander bewegbar sind. Entsprechend sind die Kontaktstücke derart ausgestaltet, dass diese in Kontakt zueinander bringbar sind, um so eine elektrische Verbindung ausbilden zu können. Ferner können die Kontaktstücke derart zueinander ausgerichtet werden, dass diese sich nicht berühren und auch bei hohen Spannungen kein Strom fließen kann, sondern zwischen den Kontaktstücken eine Isolationsstrecke vorliegt.

Entsprechend kann das elektrische Schaltgerät beispielsweise einen ersten und einen zweiten Schaltzustand aufweisen, beispielsweise einen Einschaltzustand sowie einen Ausschaltzustand. In dem ersten Schaltzustand sind die Kontaktstücke zueinander in Kontakt und in dem zweiten Schaltzustand ist zwischen den Kontaktstücken eine Isolationsstrecke ausgebildet.

Dabei können die Kontaktelemente beispielsweise unmittelbar in dem Schaltraum, also in der Atmosphäre des Schaltraums, vorliegen. Alternativ kann es vorgesehen sein, dass in dem Schaltraum ein Kapselungsgehäuse vorliegt, in welchem die Kontaktstücke angeordnet sind. Beispielsweise kann dieses Kapselungsgehäuse mit den Kontaktstücken einen Vakuumschalter ausbilden.

Bei einem elektrischen Schaltgerät ist ferner ein fluides, insbesondere gasförmiges, Isoliermedium vorgesehen. Das Isoliermedium dient insbesondere dazu, bei einem Trennen der Kontaktstücke, etwa wenn entlang dieser ein hoher Strom fließt, einen Lichtbogen zu verhindern oder zu reduzieren, so dass eine Beschädigung der Kontaktstücke durch ein Trennen derselben verhindert oder zumindest signifikant reduziert werden kann. Insbesondere soll das Isoliermedium dazu dienen, einen in dem etwa als Hochspannungsschalter ausgebildeten Schaltgerät auftretenden Lichtbogen, der insbesondere bei dem Trennen von Kontaktelementen auftreten kann, zu löschen. Darüber hinaus kann das Isoliermedium dazu dienen, auf sichere und verlässliche Weise die Funktionalität der Isolierstrecke zwischen den Kontaktstücken in dem weiten Schaltzustand des Schaltgeräts sicherstellen zu können. Ferner kann etwa eine Isolation zwischen Kapselungsgehäuse und Gehäuse des Schaltraums ermöglicht werden.

Für eine bevorzugte Funktionalität ist das Isoliermedium insbesondere ein Fluid. Besonders bevorzugt ist das Isoliermedium ein Gas. Dabei kann das Isoliermedium beispielsweise unter den Betriebsbedingungen des Schaltgeräts gasförmig vorliegen, sei es unter Vorliegen eines Überdruckes oder drucklos. Ferner kann es vorgesehen sein, dass das Isoliermedium bei einem Entlassen desselben aus dem elektrischen Schaltgerät als Gas vorliegt, also etwa bei Umgebungsdruck, wie etwa bei 1bar.

Durch das Vorsehen eines gasförmigen Isoliermediums kann es besonders einfach ermöglicht werden, dass das Isoliermedium in einen auch als Schaltraum bezeichneten Isolationsraum des Schaltgeräts eingebracht wird und dort verbleibt. Dadurch kann das Isoliermedium Kontaktelemente beziehungsweise Kontaktstücke vollständig umgeben, zwischen denen bei einem Trennen ein Lichtbogen entstehen kann, oder kann das Isoliermedium gegebenenfalls das Kapselungsgehäuse umgeben. Somit kann grundsätzlich dem Entstehen eines Lichtbogens entgegengewirkt beziehungsweise ein Löschen des Lichtbogens effektiv unterstützt werden oder kann eine effektive Isolierung zwischen Kapselungsgehäuse und Gehäuse des Schaltraums ermöglicht werden.

Grundsätzlich kann durch das Vorsehen eines gasförmigen Isoliermediums eine einfache Handhabbarkeit etwa bei einem Einbringen in den als Isolationsraum ausgebildeten Schaltraum, bei einem Halten in dem Schaltraum und gegebenenfalls bei einem Austauschen ermöglicht werden.

Schließlich kann insbesondere bei einem gasförmigen Isoliermedium durch das Ausbilden eines geeigneten Überdrucks in dem Schaltraum die Menge an in dem Isolationsraum vorhandenem Isoliermedium auf einfache Weise angepasst werden und so das Isoliervermögen an das gewünschte Anwendungsgebiet maßgeschneidert werden.

Dabei kann das Isoliermedium grundsätzlich ausgestaltet sein, wie dies aus dem Stand der Technik bekannt ist. Insbesondere kann das Isoliermedium eine fluorhaltige beziehungsweise fluorierte Verbindung umfassen, wie dies nachstehend in größerem Detail beschrieben ist. Unter einer fluorhaltigen beziehungsweise fluorierten Verbindung kann dabei in an sich bekannter Weise eine derartige Verbindung verstanden werden, die wenigstens ein Fluoratom in seiner Molekülstruktur aufweist.

Dabei kann das Isoliermedium beispielsweise unmittelbar in dem Schaltraum vorliegen, so dass es unmittelbar die Kontaktstücke umschließend vorliegt beziehungsweise angeordnet ist. Dies kann auch bei einem gewollten beziehungsweise gewünschten Betrieb der Fall sein, um bei einem Trennen der elektrischen Verbindung und dabei dem Entfernen der Kontaktstücke zueinander unmittelbar die zwischen den Kontaktstücken auszubildende Isolierstrecke ausfüllen zu können.

Alternativ oder zusätzlich kann es vorgesehen sein, dass das Isoliermedium in einem mit dem Schaltraum verbindbaren Lagervolumen angeordnet ist. In dieser Ausgestaltung kann es somit vorgesehen sein, dass das Isoliermedium bei einem normalen beziehungsweise gewünschten Betrieb und daher insbesondere dann, wenn die Kontaktstücke miteinander verbunden sind, ausschließlich oder zusätzlich zu dem Schaltraum vorliegt. Dabei kann es vorgesehen sein, dass das Isoliermedium aus dem Lagervolumen in den Schaltraum dann überführt wird, wenn ein Schaltvorgang in einen unterbrechenden Schaltzustand erfolgen soll oder erfolgt. Auch in dieser Ausgestaltung kann es sichergestellt werden, dass bei einem Schaltvorgang zum Trennen der Kontaktstücke die Kontaktstücke von dem Isoliermedium umgeben sind.

Bei dem hier beschriebenen Schaltgerät ist es ferner vorgesehen, dass der Schaltraum oder das Lagervolumen einen Auslass zum Auslassen des Isoliermediums aufweist. Ein derartiger Auslass kann beispielsweise von Vorteil sein, um das Schaltgerät zu entleeren beziehungsweise das Isoliermedium aus dem Schaltgerät und dabei insbesondere aus dem Schaltraum oder dem Lagerraum zu entlassen. Dies kann von großem Vorteil sein, da es unter Umständen erforderlich sein kann, das Schaltgerät zu entleeren, etwa nach Betriebsstörungen, im Falle einer Reparatur oder einer geplanten Revision. Daher sollte der Auslass ein geplantes Entlassen des Isoliermediums ermöglichen. Dabei ist es verständlich, dass nur der Schaltraum oder auch der Schaltraum und zusätzlich das Lagervolumen einen entsprechenden Auslass aufweisen können.

Bezüglich des Auslasses ist es ferner vorgesehen, dass an oder benachbart zu dem Auslass ein Filter vorgesehen ist, der dazu ausgestaltet ist, gasförmige Bestandteile des Isoliermediums oder deren Reaktionsprodukte zu filtern.

In anderen Worten ist es vorgesehen, dass an oder benachbart zu dem Auslass und somit in einer Auslassstrecke des Auslasses beziehungsweise des Schaltgeräts ein Filter vorgesehen ist. Der Filter dient dabei dazu, gasförmige Bestandteile des Isoliermediums oder deren Reaktionsprodukte zu filtern. Insbesondere dient der Filter dazu, selektiv fluorierte Bestandteile beziehungsweise deren Reaktionsprodukte bei einem Durchleiten des Isoliermediums durch den Filter zurückzuhalten, wie etwa zu absorbieren oder zu adsorbieren. Der Auslass mündet in der Umgebung, wobei ein den Filter verlassendes Medium in die Umgebung entlassbar ist.

Dies kann von Vorteil sein, da SF₆-freie Isoliergase oft mit Gasmischungen betrieben werden, die aus einem oder mehreren Trägergasen und speziellen additiven Substanzen bestehen. Bei den additiven Substanzen handelt es sich beispielsweise um fluorierte Verbindungen, die die dielektrischen Eigenschaften der Gasmischung in bestimmter Weise beeinflussen. Bei den Trägergasen handelt es sich in der Regel um Mischungen, die größtenteils Kohlendioxid, Stickstoff und Sauerstoff in bestimmten Verhältnissen enthalten. Während des Betriebs der Geräte entstehen durch Entladungsvorgänge Zersetzungsprodukte, die giftig sein können und deshalb nicht in die Umwelt entlassen werden können. Auch die in den Gasmischungen enthaltenen fluorierten Verbindungen können gesundheits-, umwelt- oder klimaschädlich sein und sollten deshalb nicht in die Umwelt gelangen. Somit ist es von Vorteil, eine Lösung bereitzustellen, durch welche diese schädlichen Verbindungen bei einem Durchlassen des Isoliermediums zurückgehalten werden.

Die den Filter durchschreitenden Substanzen sind dabei für die Umgebung nicht oder zumindest signifikant weniger schädlich als die fluorierten Substanzen, so dass ein Entlassen des Isoliermediums auf einfache Weise möglich ist. Dadurch kann es erlaubt werden, dass das den Filter verlassende Gemisch in die Umgebung auf umweltfreundliche Weise entlassbar ist.

Das beschriebene Schaltgerät ermöglicht somit eine besonders einfache Möglichkeit, etwa bei einer Revision oder Wartung oder bei anderen Gelegenheiten, das Isoliermedium aus dem Schaltgerät zu entfernen beziehungsweise zu entlassen.

Insbesondere kann es ermöglicht werden, dass das Isoliermedium auf einfache Weise durch den Filter geleitet werden kann, ohne aufwändige Verfahren oder Ausrüstung zu benötigen.

Insbesondere ist es bei dem beschriebenen Schaltgerät nicht notwendig, wie aus dem Stand der Technik bekannt, eine Entsorgung mittels Druckbehältern durchzuführen. Diesbezüglich wird bei Lösungen aus dem Stand der Technik die Gasfüllung eines Schaltgerätes in einen Druckbehälter umgepumpt und einer geeigneten Entsorgung zugeführt. Unter Bestimmten Umständen ist es möglich das Gas zu reinigen und wieder zu verwenden.

Demgegenüber weist die Lösung gemäß der Erfindung signifikante Vorteile auf. Denn ist die Entleerung des Schaltgerätes erforderlich, muss das Isoliermedium wie insbesondere das Gas nicht mehr in einem Druckbehälter gespeichert und transportiert werden. Das Isoliermedium kann vielmehr vor Ort durch den Filter unmittelbar abgelassen werden. Transport und Entsorgung des beladenen Filters wie etwa der beladenen Filterpatrone erfordern weit weniger Aufwand als der Umgang mit einem Druckbehälter.

Für eine Entleerung des Schaltgeräts mit Bezug auf das Isoliermedium kann es ferner bevorzugt sein, dass an einem Auslass eine Vakuumpumpe vorgesehen ist. Dadurch kann sichergestellt werden, dass keine Reste des Isoliergases in dem Schaltraum oder dem Lagervolumen verbleiben. Alternativ kann dies durch einen Anschluss realisiert werden, durch welchen etwa Luft oder Stickstoff in das Schaltgerät eingeführt werden kann, um so Reste des Isoliermediums durch einen Spülvorgang zu entfernen.

Bevorzugt kann es vorgesehen sein, dass der Filter ein Material aufweist, das ausgewählt ist aus der Gruppe bestehend aus Aktivkohle, Aluminiumoxid und einem Zeolithmaterial. Es hat sich herausgestellt, dass insbesondere die vorstehend beschriebenen Substanzen dazu geeignet sein können, die für die Umgebung schädlichen Substanzen wie insbesondere fluorierte Substanzen oder deren Reaktionsprodukte, die bei einem Schaltvorgang bedingt durch die hohe Temperatur des Lichtbogens entstehen können, zurückzuhalten, etwa zu absorbieren oder zu adsorbieren, dabei jedoch die für die Umgebung weniger schädlichen Substanzen durchfließen zu lassen, so dass diese in die Umgebung freigelassen werden können. Insbesondere können die vorgenannten Materialien fluorhaltige beziehungsweise fluorierte Substanzen zurückhalten, jedoch etwa Sauerstoff und Stickstoff passieren lassen. Ferner können die vorgenannten Materialien gegebenenfalls auftretende Reaktionsprodukte etwa der fluorierten Substanzen filtrieren, was eine besonders hohe Effektivität erlauben kann. Somit können die vorgenannten Materialien in vorteilhafter Weise dazu dienen, die Aufgabe der vorliegenden Erfindung zu lösen.

Darüber hinaus können die vorgenannten Materialien auch bei den bei einem Entlassen des Isoliermediums gegebenenfalls auftretenden Drücken stabil sein und ihre Wirkung entfalten.

Schließlich können die vorgenannten Materialien problemlos erhältlich sein und dabei kostengünstig verwendet werden.

Unter den vorgenannten Materialien kann insbesondere Aktivkohle von Vorteil sein, da diese besonders kostengünstig erhältlich ist und auch bei der späteren Entsorgung des Filters keine Probleme bereitet. Somit kann insbesondere Aktivkohle für eine problemlose Entlassung des Isoliermediums in die Umgebung geeignet sein und dabei nach einem Gebrauch kostengünstig ersetzbar sein. Aktivkohle vermag sowohl die fluorhaltigen Substanzen, als auch etwaige Zersetzungsprodukte zu binden. Die beladene Aktivkohle kann drucklos transportiert und über eine Verbrennung entsorgt werden.

Bezüglich des Zeoliths kann in nicht beschränkender Weise ein solcher vorliegen, der etwa auf SiO₂/Al₂O₃ basiert und dabei gegebenenfalls ein SiO₂/Al₂O₃-Verhältnis ("Modul") von mindestens 80 und einen Porendurchmesser von 4 bis 7 Å (0,4 bis 0,7 nm) aufweist.

Die vorbeschriebenen Vorteile können ebenfalls ermöglicht werden, wenn der Filter als Membran, insbesondere als semipermeable Membran ausgestaltet ist. Dabei kann durch das Vorsehen einer derartigen Membran eine besonders hohe Selektivität erlaubt werden, so dass die Membran beziehungsweise der Filter besonders adaptiv an das jeweilige spezifische Anwendungsgebiet angepasst werden kann. Insbesondere kann die Membran beziehungsweise der Filter besonders effektiv an das Isoliermedium und dessen Bestandteile und ferner an gegebenenfalls potentiell auftretende Reaktionsprodukte angepasst werden.

Geeignet als Membranen sind beispielsweise Polymermembranen, Zeolithmembranen, Porenmembranen, Keramikmembranen, wie diese aus dem Stand der Technik bekannt sind.

Somit kann auch unter Verwendung einer Membran ein verlässliches und sicheres Entlassen des Isoliermediums in die Umgebung ermöglicht werden.

Es kann weiterhin bevorzugt sein, dass das Isoliermedium aus wenigstens einer fluorhaltigen beziehungsweise fluorierten Verbindung und synthetischer Luft besteht. Insbesondere in dieser Ausgestaltung können besonders vorteilhafte synergistische Effekte aus der Verwendung des entsprechenden Isoliermediums und dem Filter ermöglicht werden.

Denn dadurch, dass ein Filter vorgesehen ist, der bei einem Entlassen des Isoliermediums etwa die fluorhaltigen Verbindungen und etwa deren Reaktionsprodukte zurückhält und nur die synthetische Luft passieren lässt, können die umweltschädlichen Substanzen an einem Erreichen der Umgebung gehindert werden. Dies ist etwa möglich mit den vorstehend beschriebenen Filtermaterialien, wie insbesondere mit Aktivkohle. Darüber hinaus kann dadurch, dass das Isoliermedium neben der fluorierten Verbindung nur synthetische Luft als Bestandteil aufweist, die den Filter passierenden Substanzen für die Umgebung vollkommen unschädlich sein. Dies insbesondere deshalb, da synthetische Luft im Wesentlichen ausschließlich, etwa zu ≥ 99 Gew.-%, nur aus Sauerstoff und Stickstoff besteht, welche Substanzen in verständlicher Weise keinen negativen Effekt aufweisen.

Dabei kann unter synthetischer Luft insbesondere ein Gasgemisch verstanden werden, das zu ≥ 99 Gew.-%, etwa zu ≥ 99,9 Gew.-%, nur aus Sauerstoff und Stickstoff besteht, wobei Sauerstoff einen Anteil von 20 Gew.-% mit einer Toleranz von +/-5 Gew.-% aufweist und der Rest durch Stickstoff und bis zu 1 Gew.-%, bevorzugt bis zu 0,1 Gew.-% durch Verunreinigungen gebildet sein kann.

Ferner kann es in dieser Ausgestaltung vorgesehen sein, dass die synthetische Luft in einem Anteil von ≥ 80 Gew.-% bis ≤ 95 Gew.-% vorliegt, wobei der Rest durch fluorierte Verbindungen und bis zu 1 Gew.-%, bevorzugt bis zu 0,5 Gew.-% durch Verunreinigungen gebildet sein kann.

Insbesondere kann es so verhindert werden, dass bei einem entlassen des Isoliermediums durch den Filter Substanzen in die Umgebung gelangen, die etwa einen für fluorierte Verbindungen selektiven Filter passieren, jedoch trotzdem einen schädlichen Einfluss ausüben, wie etwa Kohlendioxid. Dieses Gas ist etwa als Bestandteil für derartige Isoliermedien bekannt, kann aber in der Umgebung durch den Treibhauseffekt negative Auswirkungen aufweisen.

Insbesondere kann die fluorhaltige Verbindung wenigstens eines von einem Fluorketon und Fluornitril umfassen. Es hat sich gezeigt, dass insbesondere diese Verbindungen jeweils alleine oder in einer Kombination als Isoliermedium besonders effektiv und verlässlich arbeiten können, dabei aber durch einen Filter wie dieser vorstehend beschrieben ist, sicher und effektiv bei einem Entlassen des Isoliermediums zurückgehalten werden können. Daher können insbesondere diese Substanzen als Isoliermedium für ein elektrisches Schaltgerät gemäß der vorliegenden Erfindung besonders effektiv sein.

Weiterhin kann es bevorzugt sein, dass der Filter als austauschbare Kartusche ausgestaltet ist. In dieser Ausgestaltung können Wartungsarbeiten oder Reparaturarbeiten besonders einfach und problemlos möglich sein, da nicht nur ein Entlassen des Isoliermediums auf einfache Weise möglich ist, sondern auch nach einem Entlassen des Isoliermediums der als austauschbare Kartusche ausgestaltete Filter problemlos ersetzbar ist. Dies kann auf einfache Weise ermöglicht werden durch das Entfernen des verwendeten Filters und das Einsetzen eines neuen Filters beziehungsweise einer neuen Kartusche. Eine austauschbare Kartusche kann dabei insbesondere dadurch gekennzeichnet sein, dass sie von dem Auslass entfernbar ist und an gleicher Position eine entsprechende neue Kartusche angeordnet werden kann.

Insbesondere in dieser Ausgestaltung ist es sogar problemlos möglich, nach einem Entlassen des Isoliermediums die elektrische Schaltanlage mit einem abweichenden Isoliermedium mit Bezug auf das entlassene Isoliermedium auszustatten. Denn die erneuerte Kartusche kann auf einfache Weise mit einem anderen spezifischen Filtermaterial ausgestattet sein, so dass der Filter wiederum auf besonders einfache Weise an das spezifisch verwendete Isoliermedium angepasst werden kann.

Weiterhin kann es bevorzugt sein, dass in Flussrichtung des zu entlassenden Isoliermediums vor oder nach dem Filter eine Kühlstrecke zum Kondensieren wenigstens einer gasförmigen Komponente des Isoliermediums vorgesehen ist. Somit kann es von Vorteil sein, dass ergänzend zu dem vorbeschriebene Filter der Gasstrom auch durch eine Kühlfalle oder einen Kondensator geleitet werden kann. Dadurch lassen sich Inhaltsstoffe der Gasmischung abtrennen, die einen höheren Siede- oder Sublimationspunkt als die Trägergasmischung besitzen. Dies trifft in der Regel auf die fluorhaltigen Substanzen zu. Hierbei besteht prinzipiell die Möglichkeit, die so abgetrennten Substanzen aufzubereiten und wieder zu verwenden.

Somit kann es insbesondere von Vorteil sein, dass in Flussrichtung des Isoliermediums dieses zunächst die Kühlstrecke passiert und anschließend den Filter. So kann ein Großteil der abzutrennenden Substanzen in der Kühlfalle oder dem Kondensator gesammelt und wiederverwendet werden und der Filter lediglich dazu dienen, die die Kühlstrecke durchtretenden zu entfernenden Substanzen zurückzuhalten.

Somit kann in dieser Ausgestaltung eine besonders hohe Effektivität der Abtrennung der fluorierten Substanzen beziehungsweise deren Reaktionsprodukte mit einem besonders ökonomischen Verfahren kombiniert werden.

Hinsichtlich weiterer Vorteile und technischer Merkmale des Schaltgeräts wird auf die Beschreibung des Verfahrens, die Figuren und die Beschreibung der Figuren verwiesen, und umgekehrt.

Gegenstand der vorliegenden Erfindung ist ferner ein Verfahren zum Entlassen eines fluiden Isoliermediums aus einem Schaltgerät, wie dies vorstehend im Detail beschrieben ist, aufweisend die Verfahrensschritte:
a) Bereitstellen eines Schaltgeräts wie dieses vorstehend beschrieben ist;
b) Führen des Isoliermediums durch den Auslass und damit durch den Filter; und
c) Führen des den Filter entlassenden Mediums in die Umgebung.

Das hier beschriebene Verfahren erlaubt somit, auf besonders einfache Weise aus einem Schaltgerät das Isoliermedium, insbesondere ein fluorhaltige Substanzen und/oder deren Reaktionsprodukte aufweisendes Gasgemisch, zu entfernen. Dabei kann dieses Verfahren etwa Bestandteil sein einer Wartung, einer Revision oder anderer Vorgänge, bei denen das Isoliermedium aus dem Schaltgerät entfernt werden sollte.

Gemäß Verfahrensschritt a) wird dabei zunächst ein Schaltgerät gemäß der vorstehenden Beschreibung bereitgestellt. Diesbezüglich wird somit auf die vorstehenden Ausführungen verwiesen.

Gemäß Verfahrensschritt b) erfolgt weiterhin das Führen des Isoliermediums durch den Auslass und damit in den Filter und damit auch von Bestandteilen des Isoliermediums durch den Filter, wobei letzteres der Einfachheit halber auch als Führen des Isoliermediums durch den Filter bezeichnet werden kann. Somit wird in diesem Verfahrensschritt das Isoliermedium durch den Filter und somit durch den Auslass geführt, so dass die entsprechenden für die Umgebung schädlichen Substanzen durch den Filter zurückgehalten werden.

Da das Isoliermedium und dabei insbesondere die Gasmischung im Schaltgerät größtenteils aus Gasen besteht, die unbedenklich sind und in die Umwelt entlassen werden können, erlaubt das Verfahren, die toxischen, umwelt- oder klimaschädlichen Bestandteile durch einen Reinigungs- beziehungsweise Filterprozess abzutrennen. Dies geschieht durch das Durchleiten des Isoliermediums durch den Filter, wie etwa durch einen Aktivkohlefilter. Derartige Gasreinigungsfiltereinrichtungen sind aus anderen Gebieten bekannt und lassen sich etwa als Filterpatronen beziehungsweise austauschbare Filterkartuschen realisieren.

Beispielsweise kann es vorgesehen sein, dass das Isoliermedium vor einem Durchströmen des Filters eine Kühlstrecke durchströmt, um so etwa einen Großteil der abzutrennenden Substanzen abzutrennen und gegebenenfalls wiederzuverwerten. Anschließend können die nicht durch die Kühlstrecke herausgefilterten Substanzen durch den Filter zurückgehalten werden.

Dem Vorstehenden folgend ermöglicht das Verfahren somit auf einfache Weise den Verfahrensschritt c) und damit das Führen des den Filter entlassenden Mediums, insbesondere Gases, in die Umgebung und damit die das Schaltgerät umgebende Umwelt. Das den Filter entlassende Medium ist dabei insbesondere das Isoliermedium ohne die herausgefilterten Substanzen und kann etwa aus synthetischer Luft bestehen. Hierdurch treten keine signifikanten Beeinträchtigungen für die Umwelt auf, wie dies vorstehend im Detail beschrieben ist.

Hinsichtlich weiterer Vorteile und technischer Merkmale des Verfahrens wird auf die Beschreibung des Schaltgeräts, die Figuren und die Beschreibung der Figuren verwiesen, und umgekehrt.

Weitere Einzelheiten, Merkmale und Vorteile des Gegenstandes der Erfindung ergeben sich aus den Unteransprüchen sowie aus der nachfolgenden Beschreibung der Figuren und den zugehörigen Beispielen. In den Figuren zeigen:
- Fig. 1: schematisch eine Ausgestaltung eines elektrischen Schaltgeräts gemäß der vorliegenden Erfindung; und
- Fig. 2: eine schematische Detailansicht einer weiteren Ausgestaltung eines elektrischen Schaltgeräts gemäß der vorliegenden Erfindung.

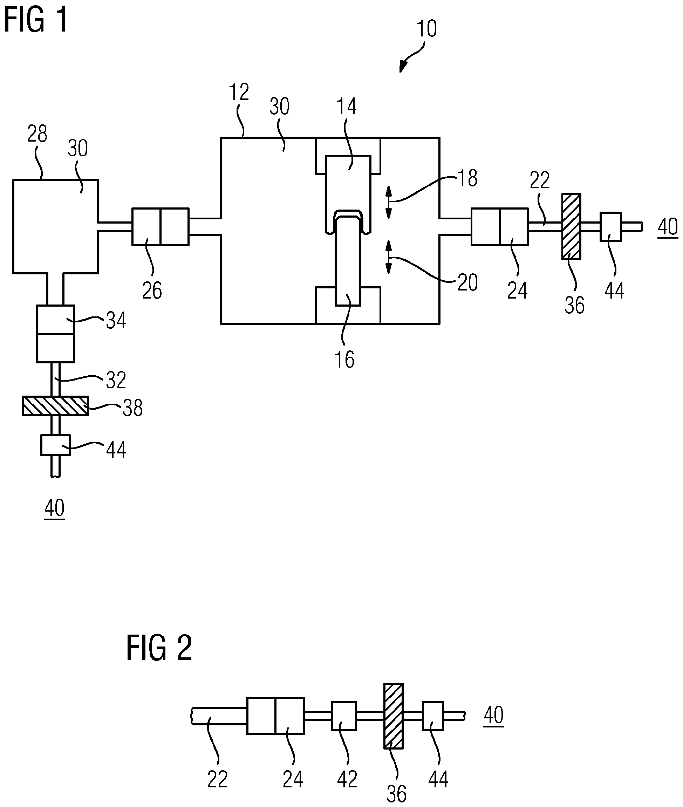

In der Figur 1 ist schematisch eine Ausgestaltung eines elektrischen Schaltgeräts 10 gezeigt. Das Schaltgerät 10 dient dem Bereitstellen und Unterbrechen einer elektrischen Verbindung.

Das Schaltgerät 10 weist einen Schaltraum 12 auf, in dem unmittelbar zwei Kontaktstücke 14, 16 angeordnet sind, die zum Bewirken einer Schalthandlung relativ zu einander bewegbar sind, wie dies durch die Pfeile 18, 20 angedeutet sein soll. Entsprechend weist das Schaltgerät 10 zwei Schaltzustände auf. Ein erster Schaltzustand ist in der Figur 1 gezeigt und stellt eine elektrische Verbindung her. In diesem Schaltzustand berühren sich die Kontaktstücke 14, 16. In einem nicht gezeigten Schaltzustand sind die Kontaktstücke 14, 16 voneinander getrennt, so dass zwischen diesen eine Isolierstrecke vorliegt.

Es ist ferner ein fluides, insbesondere gasförmiges, Isoliermedium 30 vorgesehen, das bevorzugt in dem Schaltraum 12 vorliegen kann und die Kontaktstücke 14, 16 umgeben kann. Das Isoliermedium 30 kann etwa aus wenigstens einer fluorhaltigen Verbindung und synthetischer Luft bestehen, wobei die fluorhaltige Verbindung ein Fluorketon oder Fluornitril umfassen kann.

Der Schaltraum 12 weist einen Auslass 22 auf durch den das Isoliermedium 30 aus dem Schaltelement 10 entlassen werden kann. Hierzu weist der Auslass 22 ein Ventil 24 auf, durch welches der Auslass 22 geöffnet oder geschlossen werden kann. Ferner ist eine Vakuumpumpe 44 gezeigt, mittels welcher sichergestellt werden kann, dass keine oder keine signifikante Menge des Isoliermediums 30 in dem Schaltgerät verbleibt.

Ferner kann ein mit dem Schaltraum 12 über ein Ventil 26 verbindbares Lagervolumen 28 vorgesehen sein. In diesem Fall kann es vorgesehen sein, dass das Isoliermedium 30 zusätzlich oder alternativ zu dem Schaltraum 12 auch in dem Lagervolumen 28 vorliegt und etwa nur bei einem Schaltvorgang in durch Öffnung des Ventils 26 in den Schaltraum 12 fließt.

Auch das Lagervolumen 28 weist einen Auslass 32 auf durch den das Isoliermedium 30 aus dem Lagervolumen 28 entlassen werden kann. Hierzu weist der Auslass 32 ein Ventil 34 auf, durch welches der Auslass 32 geöffnet oder geschlossen werden kann. Wiederum ist eine Vakuumpumpe 44 in dem Auslass 32 gezeigt.

Es ist ferner gezeigt, dass sowohl an dem Auslass 22 des Schaltraums 12 als auch an dem Auslass 32 des Lagerraums 28 jeweils ein etwa als austauschbare Kartusche ausgestalteter Filter 36, 38 vorgesehen ist. Der Filter 36, 38 ist dazu ausgestaltet, gasförmige Bestandteile des Isoliermediums 30 oder deren Reaktionsprodukte zu filtern. Insbesondere kann der Filter selektiv fluorhaltige Bestandteile oder deren Reaktionsprodukte zurückhalten und damit absorbieren oder adsorbieren.

Insbesondere weist der Filter 36, 38 Aktivkohle, Aluminiumoxid oder ein Zeolithmaterial auf. Alternativ kann der Filter 36, 38 als Membran ausgestaltet sein.

Eine derartige Ausgestaltung erlaubt es etwa bei einer Reparatur oder einer Revision, dass das Isoliermedium 30 beziehungsweise das den Filter 36, 38 verlassende Gas einfach und umweltfreundlich in die Umgebung 40 entlassbar ist.

Die Figur 2 zeigt ein Detail einer weiteren Ausgestaltung eines Schaltgeräts 10. Im Detail ist der Auslass 22 des Schaltraums 12 mit dem Ventil 24, der Vakuumpumpe 44 und der Filter 36 gezeigt. Dabei ist ferner gezeigt, dass in Flussrichtung des zu entlassenden gasförmigen Isoliermediums 30 vor dem Filter 36 eine etwa als Kühlfalle oder Kondensator ausgestaltete Kühlstrecke 42 zum Kondensieren wenigstens einer gasförmigen Komponente vorgesehen ist. Dies erlaubt es, etwa einen Großteil der abzutrennenden Substanzen in der Kühlstrecke 42 abgetrennt werden, um diese gegebenenfalls wiederzuverwerten. Anschließend können die nicht durch die Kühlstrecke 42 herausgefilterten Substanzen durch den Filter 36 zurückgehalten werden.

Die vorbeschriebene Ausgestaltung der Figur 2 gilt entsprechend für den Auslass 32 des Lagervolumens 28.

Die einzelnen Kombinationen der Bestandteile und der Merkmale von den bereits erwähnten Ausführungen sind exemplarisch; der Austausch und die Substitution dieser Lehren mit anderen Lehren, die in dieser Druckschrift enthalten sind mit den zitierten Druckschriften werden ebenfalls ausdrücklich erwogen. Der Fachmann erkennt, dass Variationen, Modifikationen und andere Ausführungen, die hier beschrieben werden, ebenfalls auftreten können ohne von dem Erfindungsgedanken und dem Umfang der Erfindung abzuweichen.

Entsprechend ist die obengenannte Beschreibung beispielhaft und nicht als beschränkend anzusehen. Das in den Ansprüchen verwendete Wort umfassen schließt nicht andere Bestandteile oder Schritte aus. Der unbestimmte Artikel "ein" schließt nicht die Bedeutung eines Plurals aus. Die bloße Tatsache, dass bestimmte Maße in gegenseitig verschiedenen Ansprüchen rezitiert werden, verdeutlicht nicht, dass eine Kombination von diesen Maßen nicht zum Vorteil benutzt werden kann. Der Umfang der Erfindung ist in den folgenden Ansprüchen definiert.

## Patentansprüche

1. Elektrisches Schaltgerät zum Bereitstellen und Unterbrechen einer elektrischen Verbindung, aufweisend einen Schaltraum (12), wobei unmittelbar in dem Schaltraum (12) oder in einem in dem Schaltraum (12) angeordneten und zu dem Schaltraum (12) gasdicht ausgebildeten Kapselungsgehäuse zwei Kontaktstücke (14, 16) angeordnet sind, wobei die Kontaktstücke (14, 16) zum Bewirken einer Schalthandlung relativ zu einander bewegbar sind, wobei ferner ein fluides Isoliermedium (30) vorgesehen ist, dass in dem Schaltraum (12) oder einem mit dem Schaltraum (12) verbindbaren Lagervolumen (28) angeordnet ist, und wobei der Schaltraum (12) oder das Lagervolumen (28) einen Auslass (22, 32) zum Auslassen des fluiden Isoliermediums (30) aufweist, **dadurch gekennzeichnet, dass** an oder benachbart zu dem Auslass (22, 32) ein Filter (36, 38) vorgesehen ist, der dazu ausgestaltet ist, gasförmige Bestandteile des durch den Auslass (22, 32) geführten Isoliermediums (30) oder deren Reaktionsprodukte zu filtern und der Auslass (22, 23) in der Umgebung mündet, so dass ein den Filter (36, 38) verlassendes Isoliermedium (30) in die Umgebung (40) entlassbar ist.

2. Schaltgerät nach Anspruch 1, **dadurch gekennzeichnet, dass** der Filter (36, 38) ein Material aufweist, das ausgewählt ist aus der Gruppe bestehend aus Aktivkohle, Aluminiumoxid und einem Zeolithmaterial.

3. Schaltgerät nach Anspruch 2, **dadurch gekennzeichnet, dass** der Filter (36, 38) Aktivkohle aufweist.

4. Schaltgerät nach einem der Ansprüche 1 bis 3, **dadurch gekennzeichnet, dass** der Filter (36, 38) als Membran ausgestaltet ist.

5. Schaltgerät nach einem der Ansprüche 1 bis 4, **dadurch gekennzeichnet, dass** das Isoliermedium (30) aus wenigstens einer fluorhaltigen Verbindung und synthetischer Luft besteht.

6. Schaltgerät nach einem der Ansprüche 1 bis 5, **dadurch gekennzeichnet, dass** die fluorhaltige Verbindung wenigstens eines aus einem Fluorketon und Fluornitril umfasst.

7. Schaltgerät nach einem der Ansprüche 1 bis 6, **dadurch gekennzeichnet, dass** der Filter (36, 38) als austauschbare Kartusche ausgestaltet ist.

8. Schaltgerät nach einem der Ansprüche 1 bis 7, **dadurch gekennzeichnet, dass** in Flussrichtung des zu entlassenden Isoliermediums (30) vor oder nach dem Filter (36, 38) eine Kühlstrecke (42) zum Kondensieren wenigstens einer gasförmigen Komponente des Isoliermediums (30) vorgesehen ist.

9. Verfahren zum Entlassen eines fluiden Isoliermediums (30) aus einem Schaltgerät (10) nach einem der Ansprüche 1 bis 8, aufweisend die Verfahrensschritte:
a) Bereitstellen eines Schaltgeräts (10) nach einem der Ansprüche 1 bis 8;
b) Führen des Isoliermediums (30) durch den Auslass (22, 32); und
c) Führen des den Filter (36, 38) entlassenden Isoliermediums (30) in die Umgebung (40).

## Claims

1. Electrical switching device for providing and interrupting an electrical connection, having a switching chamber (12), wherein two contact pieces (14, 16) are arranged directly in the switching chamber (12) or in an encapsulation housing arranged in the switching chamber (12) and configured in a gas-tight manner in relation to the switching chamber (12), wherein the contact pieces (14, 16) are movable relative to one another for the execution of a switching action, wherein also provided is a fluid insulating medium (30), which is arranged in the switching chamber (12) or in a storage volume (28) which can be connected to the switching chamber (12), and wherein the switching chamber (12) or the storage volume (28) has an outlet (22, 32) for releasing the fluid insulating medium (30), **characterized in that** provided on or adjacent to the outlet (22, 32) is a filter (36, 38), which is designed to filter gaseous constituents of the insulating medium (30), or the reaction products thereof, conveyed through the outlet (22, 32), and the outlet (22, 23) terminates in the surrounding environment, so that an insulating medium (30) leaving the filter (36, 38) can be released into the environment (40).

2. Switching device according to Claim 1, **characterized in that** the filter (36, 38) incorporates a material which is selected from the group comprised of activated carbon, aluminium oxide and a zeolite material.

3. Switching device according to Claim 2, **characterized in that** the filter (36, 38) incorporates activated carbon.

4. Switching device according to one of Claims 1 to 3, **characterized in that** the filter (36, 38) is configured in the form of a membrane.

5. Switching device according to one of Claims 1 to 4, **characterized in that** the insulating medium (30) is comprised of at least one fluorinated compound and synthetic air.

6. Switching device according to one of Claims 1 to 5, **characterized in that** the fluorinated compound comprises at least one of the following: a fluoroketone and a fluoronitrile.

7. Switching device according to one of Claims 1 to 6, **characterized in that** the filter (36, 38) is configured in the form of a replaceable cartridge.

8. Switching device according to one of Claims 1 to 7, **characterized in that** provided upstream or downstream of the filter (36, 38) in the direction of flow of the insulating medium (30) to be released is a cooling path (42) for condensing at least one gaseous component of the insulating medium (30).

9. Method for releasing a fluid insulating medium (30) from a switching device (10) according to one of Claims 1 to 8, comprising the following method steps:
a) providing a switching device (10) according to one of Claims 1 to 8;
b) conveying the insulating medium (30) through the outlet (22, 32); and
c) conveying the medium leaving the filter (36, 38) into the environment (40).

## Revendications

1. Appareil électrique de coupure pour disposer d'une liaison électrique et l'interrompre, comportant un espace (12) de coupure, dans lequel il est monté directement dans l'espace (12) de coupure ou dans un boîtier de blindage, disposé dans l'espace (12) de coupure et constitué de manière étanche au gaz par rapport à l'espace (12) de coupure, deux pièces (14, 16) de contact, dans lequel les pièces (14, 16) de contact sont mobiles l'une par rapport à l'autre pour provoquer une manipulation de coupure, dans lequel en outre il est prévu un milieu (30) isolant fluide, qui est disposé dans l'espace (12) de coupure ou dans un volume (28) de stockage pouvant communiquer avec l'espace (12) de coupure, et dans lequel l'espace (12) de coupure ou le volume (28) de stockage a une sortie (22, 32) pour la sortie du milieu (30) isolant fluide, **caractérisé en ce que**, à ou au voisinage de la sortie (22, 32) est prévu un filtre (36, 38), qui est conformé pour filtrer des constituants gazeux du milieu (30) isolant passant par la sortie (22, 32) ou ses produits de réaction et la sortie (22, 23) débouche dans l'environnement, de sorte qu'un milieu (30) isolant, quittant le filtre (36, 38), peut être évacué dans l'environnement (40).

2. Appareil de coupure suivant la revendication 1, **caractérisé en ce que** le filtre (36, 38) comporte un matériau, qui est choisi dans le groupe constitué du charbon actif, de l'oxyde d'aluminium et d'un matériau de zéolite.

3. Appareil de coupure suivant la revendication 2, **caractérisé en ce que** le filtre (36, 38) comporte du charbon actif.

4. Appareil de coupure suivant l'une des revendications 1 à 3, **caractérisé en ce que** le filtre (36, 38) est en forme de membrane.

5. Appareil de coupure suivant l'une des revendications 1 à 4, **caractérisé en ce que** le milieu (30) isolant est constitué d'au moins un composé fluoré et d'air synthétique.

6. Appareil de coupure suivant l'une des revendications 1 à 5, **caractérisé en ce que** le composé fluoré comprend au moins l'un d'une cétone fluorée et d'un nitrile fluoré.

7. Appareil de coupure suivant l'une des revendications 1 à 6, **caractérisé en ce que** le filtre (36, 38) est sous la forme d'une cartouche remplaçable.

8. Appareil de coupure suivant l'une des revendications 1 à 7, **caractérisé en ce qu'**il est prévu, dans le sens du flux du milieu (30) isolant évacué, avant ou après le filtre (36, 38), une section (42) de refroidissement pour la condensation d'au moins un composant gazeux du milieu (30) isolant.

9. Procédé d'évacuation d'un milieu (30) isolant fluide d'un appareil (10) de coupure suivant l'une des revendications 1 à 8, comportant les stades de procédé :
a) on se procure un appareil (10) de coupure suivant l'une des revendications 1 à 8 ;
b) on conduit le milieu (30) isolant dans la sortie (22, 32) ; et
c) on conduit le milieu (30) isolant quittant le filtre (36, 38) à l'environnement (40).
